# EUROPEAN PATENT APPLICATION

(11) **EP 1 454 574 A1**
(43) Date of publication of application: **08.09.2004**
(21) Application number: 03380046.7
(22) Date of filing: 27.02.2003
(51) Int. Cl.: A47J 31/42, A47J 31/40

(54) **Coffee grinding and measuring-out device**

(30) Priority: 05.03.2002 ES 200200543 U
(71) Applicant: Diaz Blanco, German, 45910 Escalona, Toledo (ES)
(72) Inventor: Diaz Blanco, German, 45910 Escalona, Toledo (ES)
(74) Representative: Maldonado Jordan, Julia

(57) **Abstract**

Coffee grinding and measuring-out device, that, is constituted from a body (1), on the upper upper part of which, a coffee bean hopper (2) is placed under which there is a grinder (3) assembled on elastic and buffer supports (5), that prevent noises and vibrations during the operation of said grinder (3). Under said grinder (3) a measuring-out device (4) has been provided to receive the coffee dropping from this measuring-out device (4) to the corresponding receiver plate for the determined quantity of coffee. This coffee grinding and measuring-out device, is characterized in that programming buttons (8) have been included, which makes possible the visualisation on a display (9) of the number of coffee quantities supplied. This coffee grinding and measuring-out device is optionally capable of including an infra-red system to set the capacity of the measuring-out device (4) and of the actual grinder activation.

## Description

### OBJECT OF THE INVENTION

The present invention refers to a device provided for grinding and for dispatching a determined quantity of ground coffee on a plate that is advantageously placed to receive this determined quantity of coffee, in such a manner, that the placement of the plate in the appropriate location implies the activation of the grinder and the subsequent dropping of the ground coffee towards a measuring-out device, and from this, towards the receiver that constitutes the plate.

An object of the invention is to provide a grinding and measuring-out device of ground coffee, for use in catering and in similar services, so that when a determined quantity of coffee is requested, the device performs the grinding and the measured-out dispatching of the coffee, which falls into the corresponding plate from which the preparation of the coffee infusion is carried out.

### BACKGROUND OF THE INVENTION

Numerous types of apparatus for grinding coffee are known, and which provide a determined quantity of ground coffee on a receiver plate, in order to carry out subsequently, the preparation of a coffee infusion.

Specifically, utility model 9701545 describes an apparatus with two conduits, each corresponding to a measuring-out device, in such a manner, that on the lower end, the conduits are independent from each other, so as to supply a quantity of coffee through each one of them, whilst on the upper part, these conduits concur in a common neck, coupled to the corresponding coffee grinder. In this apparatus, the arrangement of a ground coffee receiver plate in one or other of these measuring-out conduits implies the activation of appropriate means for preparing the determined quantity of coffee, during this operation the tilting of a gate situated on the upper confluence between the two conduits takes place, so as to leave free the conduit from which the request is made and close the other conduit, all this in such a manner, that, once the plate with the corresponding quantity of coffee has been removed, the activation of the coffee grinder is produced, dropping the corresponding quantity in the conduit which has been left empty, all this, in such a manner, that in the event that a new quantity of coffee from the this measuring-out conduit is requested, the conduit does not act. This makes necessary a new request for a determined quantity of coffee form the other conduit, at which moment, the tilting of the corresponding gate is produced, closing in the first place, said conduit and opening the conduit from which the quantity of coffee has now been requested.

This apparatus provides the grinding of a determined quantity of coffee that may be single or double, though it presents the problem, that in the event of a breakdown of the grinder, the apparatus will not provide coffee, the same occurring in circumstances when a breakdown of any other item of the apparatus assembly occurs, since the measuring-out though one or other conduit depends in both cases, on a common operation.

This problem is solved by means of an apparatus described in utility model 20001958, the holder of which is the actual applicant of the utility model that is now being applied for, in such a manner, that in this apparatus, corresponding to utility model 20001958, two independent grinders are established, under which the measuring-out device is placed, one for each grinder, also independent, the same being placed over the zone or part where the receiver plate for the quantity of coffee is located, all this in such a manner, that when a plate is placed in one or other location, and the corresponding push-button is pressed, it produces the activation of the respective grinder that grinds the quantity of coffee which drops to the respective measuring-out device and from it, to the plate placed under the same, making possible the constant requesting of the coffee from one same measuring-out device, the other constantly resting, since the actuation of both is totally independent, without any type of functional relationship.

### DESCRIPTION OF THE INVENTION

The coffee bean grinding and measuring-out device that is the object of the invention is based on the description of utility model 20001958 of the same applicant, though instead of being double, it is a single apparatus, that is to say, it is provided solely to grind and to supply a determined quantity of coffee, though it may be made double, only by pressing a push-button with this indication, while, if this pressing is not carried out, the apparatus shall always supply a single quantity of coffee.

More specifically, the apparatus of the invention conventionally comprises a coffee bean hopper placed on the upper part over the corresponding body, and under this hopper, a grinder assembled on elastic supports that prevent any type of vibration and even noises during the grinding operation. The corresponding measuring-out device has been provided below this grinder, under which a press-button is placed, which, when pressed by the ground coffee receiver plate, activates the grinder and in consequence the grinding of the quantity of coffee, the same reaching the measuring-out device and from here, to the plate placed under this measuring-out device.

The apparatus is complemented with a grindstone polishing device, that regulates the thickness of the grinding, and may even be equipped with an infra-red system in the actual coffee measuring-out device to adjust its capacity and to automatically stop the grinding when the ground coffee exceeds a determined quantity in said measuring-out device.

The apparatus is additionally equipped with an internal timer that sets the grinding time, as well as the already indicated push-button by means of which a double quantity of coffee may be requested and provided by the apparatus, and even be equipped with programming push-buttons and with a visualization display of the total or partial amount of the supplied quantity, all this by means of an on/off switch.

By means of this apparatus, with size and configuration more compact than that of the conventional apparatus, the problem presented by the rest of the apparatus provided for these same ends, such as noises, vibrations and others, is solved, because due to the fact that the grinder is assembled on an elastic suspension system, any type of noise and vibration is avoided.

Moreover, the apparatus is equipped with an additional push-button element, corresponding to the double quantity, the pressing of which makes the apparatus supply a double quantity of ground coffee whilst, if this push-button is not pressed, the apparatus will always supply a single quantity of ground coffee, that is to say, the same quantity.

### DESCRIPTION OF THE DRAWINGS

In order to complement the description being made and with the purpose of aiding the better understanding of the characteristics of the invention, according to a preferred exemplary and practical embodiment of the same, the present specification is enclosed with a single sheet of drawings in which, with illustrative and non restrictive character, the following has been represented:

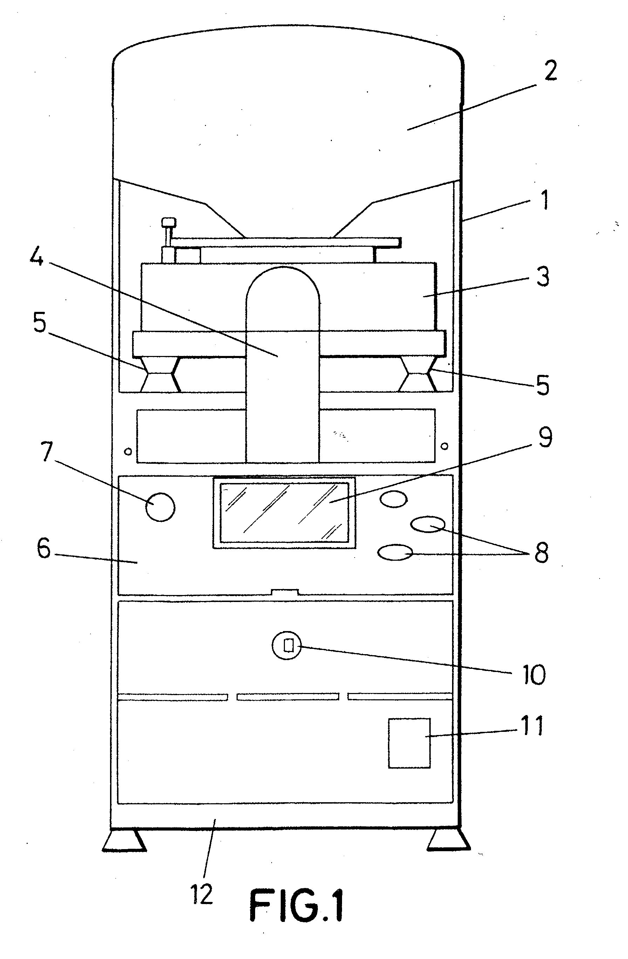

The sole figure that is shown in the drawing sheet represents a front schematic view of the grinding and ground coffee measuring-out device performed according to the object of the invention.

### PREFERRED EMBODIMENT OF THE INVENTION

In view of the represented figure, it can be observed how the recommended device is constituted as from a body (1), on the upper part of which, a coffee bean hopper (2) is placed, leading to a grinder (3) by means of which the coffee grinding is carried out as shall be explained forthwith. Under said grinder (3) a measuring-out device (4) has been provided, which receives the ground coffee.

Grinder (3) is assembled on elastic and buffer supports (5) that prevent noises and vibrations during the operation of said grinder (3).

A panel (6) has been provided below the measuring-out device (4), in which a push-button (7) is located, the pressing of which permits the obtention of a double quantity of coffee, since the device is planned for supplying always one same and single quantity of coffee, unless a push-button (7) is pressed, in which case, as has been indicated, the quantity shall be double.

Programming buttons (8) are located on this front panel (6) to permit the visualisation of the number or amount of the quantity of coffee supplied on a display (9).

Under this zone, a push-button (10) has been provided that shall be pressed by means of the corresponding receiver plate of the quantity of ground coffee, this plate is placed on an appropriate support, as for example, a support plate with guides or any other means, provided that when in position, the plate presses, against the push-button (10), at which moment, it is activated and starts the operation of the grinder (3) which grinds a quantity of coffee that drops on the measuring-out device (4) and from here, to the plate placed opposite the push-button (10), in such a manner that if the push-button (7) is pressed, the coffee supplied shall then be a double quantity.

The apparatus or device includes the corresponding on/off switch (11), as well as a bottom tray (12) for the collection of residues.

This device has the possibility of including an infra-red system to adjust the capacity of the measuring-out device (4) and of the actual activation of the grinder (3), additionally being provided with an internal timer by means of which it is possible to set the coffee grinding time

Evidently, the device may operate by prepayment or introduction of coins in a coin-compartment that is included to that effect, or else by being simply prepared for activation by placing the plate over the push-button (10).

It may also have a window over the hopper (2) in order to know continuously, the quantity of coffee bean stored in said hopper, equally including means that permit the setting of the grinding thickness.

## Claims

1. Coffee grinding and measuring-out device, that, being provided in order to grind a determined quantity of coffee and to supply it to a receiver plate that is placed pressing against a push-button, by means of which, the activation and on-set of the operation of different means is carried out, is **characterized in that**, under the coffee bean storage hopper, the corresponding grinder has been provided, assembled on elastic supports that prevent noise and vibration during the operation of this grinder, under which the respective measuring-out device that receives the ground coffee is placed, the coffee dropping from this measuring-out device to the corresponding receiver plate for the determined quantity of coffee; a panel with a push-button having been provided on the front part, the pressing of which implies the supply of a double quantity of ground coffee.

2. Coffee grinding and measuring-out device, according to Claim 1, **characterized in that** programming buttons have been included, the activation of which makes possible the visualisation on a display, similarly established on the front panel, of the number of coffee quantities supplied.

3. Coffee grinding and measuring-out device, according to the previous Claims, **characterized in that** optionally, it is capable of including an infra-red system to set the capacity of the measuring-out device and of the actual grinder activation.
